# EUROPEAN PATENT APPLICATION

(11) **EP 3 067 907 A1**
(43) Date of publication of application: **14.09.2016**
(21) Application number: 14859585.3
(22) Date of filing: 14.03.2014
(51) Int. Cl.: H01G 11/62, H01G 11/60

(54) **ALKALI METAL ION CAPACITOR, METHOD FOR MANUFACTURING SAME, AND METHOD FOR CHARGING/DISCHARGING SAME**

(30) Priority: 08.11.2013 JP 2013232381
(71) Applicant: Sumitomo Electric Industries, Ltd., Osaka-shi, Osaka 541-0041 (JP)
(72) Inventor: OKUNO, Kazuki, Itami-shi, Hyogo 664-0016 (JP); MAJIMA, Masatoshi, Itami-shi, Hyogo 664-0016 (JP); UEDA, Mitsuyasu, Itami-shi, Hyogo 664-0016 (JP); TAKEYAMA, Tomoharu, Itami-shi, Hyogo 664-0016 (JP); OGAWA, Mitsuyasu, Itami-shi, Hyogo 664-0016 (JP); TAKAHASHI, Kenji, Itami-shi, Hyogo 664-0016 (JP)
(74) Representative: Boult Wade Tennant
(86) International application number: PCT/JP2014/056900
(87) International publication number: WO 2015/068410

(57) **Abstract**

An alkali metal ion capacitor includes a positive electrode containing a positive electrode active material, a negative electrode containing a negative electrode active material, a separator disposed between the positive electrode and the negative electrode, and an electrolyte. The electrolyte contains an alkali metal salt and an ionic liquid. The total content of the alkali metal salt and the ionic liquid in the electrolyte is 60 mass% or more. The electrolyte has alkali metal ion conductivity. The alkali metal salt is a salt of a first alkali metal ion serving as a first cation and a first anion. The positive electrode active material contains a material that reversibly carries at least the first anion and the negative electrode active material contains a material that reversibly carries the first alkali metal ion. The negative electrode active material is pre-doped with a second alkali metal ion until the potential of the negative electrode reaches 0.05 V or less with respect to a second alkali metal. The alkali metal ion capacitor has an upper-limit voltage for charging and discharging of more than 3.8 V.

## Description

### Technical Field

The present invention relates to an alkali metal ion capacitor that is charged and discharged at a high upper-limit voltage for charging, and a method for producing the alkali metal ion capacitor and a method for charging and discharging the alkali metal ion capacitor.

### Background Art

With environmental problems being highlighted, systems for converting clean energy such as sunlight or wind power into electric power and storing the electric power as electric energy have been actively developed. Known examples of such electricity storage devices include lithium ion secondary batteries, electric double-layer capacitors (EDLCs), and lithium ion capacitors. In recent years, attention has been paid to capacitors such as EDLCs and lithium ion capacitors in terms of excellent instantaneous charge-discharge properties, high output properties, and ease of handling.

Such capacitors have a capacity lower than that of lithium ion secondary batteries or the like, but lithium ion capacitors have advantages of both lithium ion secondary batteries and EDLCs and tend to have a relatively high capacity. Therefore, such lithium ion capacitors are promising for use in various applications.

Lithium ion capacitors generally include a positive electrode containing activated carbon or the like as a positive electrode active material, a negative electrode containing, as a negative electrode active material, a carbon material or the like that occludes and releases lithium ions, and an electrolyte.

The electrolyte of the lithium ion capacitor is generally an organic solvent solution (organic electrolyte) containing a supporting salt such as a lithium salt. The organic solvent of the organic electrolyte is, for example, ethylene carbonate or diethyl carbonate (PTL 1). It has been also studied that an organic electrolyte containing an ionic liquid in addition to the supporting salt and the organic solvent is used for lithium ion capacitors (PTL 2).

### Citation List

### Patent Literature

PTL 1: Japanese Unexamined Patent Application Publication No. 2007-294539
PTL 2: Japanese Unexamined Patent Application Publication No. 2012-142340

### Summary of Invention

### Technical Problem

Among capacitors, lithium ion capacitors can have a relatively high charging voltage and thus are advantageous in terms of an increase in capacity. However, activated carbon used as a positive electrode active material for lithium ion capacitors has many active sites and easily decomposes an electrolyte because the potential of a positive electrode during charging increases when the charging voltage is increased. In particular, lithium ion capacitors contain an organic electrolyte as described in PTL 1 and PTL 2. If the charging voltage of a lithium ion capacitor containing an organic electrolyte is increased, the oxidative decomposition of an organic solvent contained in the organic electrolyte considerably appears in the positive electrode. This generates a large amount of gas, which makes it difficult to stably perform charging and discharging. Therefore, when an organic electrolyte is used, it is difficult to increase the upper-limit voltage for charging of alkali metal ion capacitors such as lithium ion capacitors.

### Solution to Problem

An object of the present invention is to provide an alkali metal ion capacitor that can be stably charged and discharged even when the capacitor is charged to an upper-limit voltage of more than 3.8 V.

One aspect of the present invention relates to an alkali metal ion capacitor including a positive electrode (first electrode) containing a positive electrode active material, a negative electrode (second electrode) containing a negative electrode active material, a separator disposed between the positive electrode and the negative electrode, and an electrolyte,
wherein the electrolyte contains an alkali metal salt and an ionic liquid, a total content of the alkali metal salt and the ionic liquid in the electrolyte is 60 mass% or more, and the electrolyte has alkali metal ion conductivity,
the alkali metal salt is a salt of a first alkali metal ion serving as a first cation and a first anion,
the positive electrode active material contains a material that reversibly carries at least the first anion,
the negative electrode active material contains a material that reversibly carries the first alkali metal ion,
the negative electrode active material is pre-doped with a second alkali metal ion until a potential of the negative electrode reaches 0.05 V or less with respect to a second alkali metal, and
the alkali metal ion capacitor has an upper-limit voltage for charging and discharging of more than 3.8 V.

Another aspect of the present invention relates to a method for producing an alkali metal ion capacitor, the method including:
a first step of preparing an electrolyte having alkali metal ion conductivity and containing an ionic liquid and an alkali metal salt which is a salt of a first alkali metal ion serving as a first cation and a first anion, a total content of the alkali metal salt and the ionic liquid being 60 mass% or more;
a second step of accommodating, in a cell case, the electrolyte and an electrode group that includes a positive electrode serving as a first electrode containing a positive electrode active material, a negative electrode serving as a second electrode containing a negative electrode active material, a separator disposed between the positive electrode and the negative electrode, and a third electrode electrically connected to the negative electrode and containing a second alkali metal; and
a third step of causing a second alkali metal ion to elute from the third electrode at a temperature of 70°C to 125°C while the electrode group is immersed in the electrolyte to pre-dope the negative electrode active material with the second alkali metal ion until a potential of the negative electrode reaches 0.05 V or less with respect to the second alkali metal, thereby producing an alkali metal ion capacitor having an upper-limit voltage for charging and discharging of more than 3.8 V,
wherein the positive electrode active material contains a material that reversibly carries at least the first anion, and
the negative electrode active material contains a material that reversibly carries the first alkali metal ion.

Still another aspect of the present invention relates to a method for charging and discharging an alkali metal ion capacitor, the method including:
a step of charging and discharging an alkali metal ion capacitor at an upper-limit voltage of more than 3.8 V,
wherein the alkali metal ion capacitor includes a positive electrode containing a positive electrode active material, a negative electrode containing a negative electrode active material, a separator disposed between the positive electrode and the negative electrode, and an electrolyte,
the electrolyte has alkali metal ion conductivity and contains an alkali metal salt and an ionic liquid, a total content of the alkali metal salt and the ionic liquid in the electrolyte being 60 mass% or more,
the alkali metal salt is a salt of a first alkali metal ion serving as a first cation and a first anion,
the positive electrode active material contains a material that reversibly carries at least the first anion,
the negative electrode active material contains a material that reversibly carries the first alkali metal ion, and
the negative electrode active material is pre-doped with a second alkali metal ion until a potential of the negative electrode reaches 0.05 V or less with respect to a second alkali metal.

### Advantageous Effects of Invention

According to the above-described aspects of the present invention, there can be provided an alkali metal ion capacitor that can be reversibly charged and discharged in a stable manner even when charging is performed to an upper-limit voltage of more than 3.8 V. Furthermore, since generation of gas does not easily occur even when charging is performed to a high upper-limit voltage, a high-capacity alkali metal ion capacitor can be obtained.

### Brief Description of Drawings

[Fig. 1] Figure 1 is a schematic sectional view illustrating a porous body having a skeleton with a three-dimensional network structure.
[Fig. 2] Figure 2 schematically illustrates a charging and discharging system according to an embodiment of the present invention.
[Fig. 3] Figure 3 is a longitudinal sectional view schematically illustrating an alkali metal ion capacitor according to an embodiment of the present invention. Description of Embodiments

### [Description of embodiments of invention]

First, the contents of embodiments according to the present invention will be described.

In one embodiment of the present invention, (1) an alkali metal ion capacitor includes a positive electrode (first electrode) containing a positive electrode active material, a negative electrode (second electrode) containing a negative electrode active material, a separator disposed between the positive electrode and the negative electrode, and an electrolyte,
wherein the electrolyte contains an alkali metal salt and an ionic liquid, a total content of the alkali metal salt and the ionic liquid in the electrolyte is 60 mass% or more, and the electrolyte has alkali metal ion conductivity,
the alkali metal salt is a salt of a first alkali metal ion serving as a first cation and a first anion,
the positive electrode active material contains a material that reversibly carries at least the first anion,
the negative electrode active material contains a material that reversibly carries the first alkali metal ion,
the negative electrode active material is pre-doped with a second alkali metal ion until a potential of the negative electrode reaches 0.05 V or less with respect to a second alkali metal, and
the alkali metal ion capacitor has an upper-limit voltage for charging and discharging of more than 3.8 V.

When the charging voltage of known lithium ion capacitors including an organic electrolyte is increased, the potential of a positive electrode during charging increases. Consequently, an organic solvent contained in the organic electrolyte is subjected to oxidative decomposition in the positive electrode.

As a result, a large amount of gas is generated, which inhibits stable charging and discharging. When the upper-limit voltage for charging and discharging (i.e., upper-limit voltage for charging) is increased in order to increase the capacity of a capacitor, charging and discharging sometimes cannot be reversibly performed. That is, the upper-limit voltage for charging and discharging is a property of capacitors that cannot be freely determined by users and the like but is determined at the time of designing an alkali metal ion capacitor in accordance with the constituent elements of the capacitor.

According to the embodiment of the present invention, the content of the alkali metal salt and the ionic liquid is high. Therefore, even when the charging voltage is increased, the decomposition of the electrolyte can be effectively suppressed. Thus, even when charging is performed to an upper-limit voltage of more than 3.8 V, charging and discharging can be reversibly performed in a stable manner. Since the charging voltage can be increased, the capacity of the positive electrode active material can be effectively used, which can considerably increase the capacity of the alkali metal ion capacitor.

Note that the ionic liquid is a salt in a molten state (molten salt) and is a liquid having ion conductivity.
(2) Preferably, the first anion is a bis(sulfonyl)amide anion, and the content of a salt of the first alkali metal ion and the bis(sulfonyl)amide anion in the alkali metal salt is 65 mol% or more. When the content of the salt of the first alkali metal ion and the bis(sulfonyl)amide anion in the alkali metal salt is within the above range, the viscosity and melting point of the electrolyte can be decreased, which allows smooth movement of ions.
(3) Preferably, the first anion is a bis(sulfonyl)amide anion, the ionic liquid contains a molten salt of a second cation and a second anion, the second cation is an organic cation, and the second anion is the same as the first anion. When the electrolyte contains such a first anion, a second cation, and a second anion, the viscosity and melting point of the electrolyte can be decreased, which allows smooth movement of ions. Furthermore, alkali metal ions serving as charge carriers can be smoothly occluded into and released from the negative electrode active material. This is advantageous in terms of reversibly performing charging and discharging.
(4) Preferably, the first anion is a bis(fluorosulfonyl)amide anion, and the organic cation is an organic onium cation having an imidazole skeleton. When the electrolyte contains such an anion and a cation, the viscosity and melting point can be further decreased.
(5) Preferably, the positive electrode contains the positive electrode active material and a positive electrode current collector on which the positive electrode active material is carried, the negative electrode contains the negative electrode active material and a negative electrode current collector on which the negative electrode active material is carried, the positive electrode current collector is a first metal porous body having a hollow skeleton with a three-dimensional network structure, and the negative electrode current collector is a second metal porous body having a hollow skeleton with a three-dimensional network structure. When such a first porous body and a second porous body are used, the filling amount of the active material can be increased. This is advantageous in terms of increasing the capacity of the alkali metal ion capacitor and also increasing the output of the capacitor.
(6) Preferably, the total content of the alkali metal salt and the ionic liquid in the electrolyte is 70 mass% or more. When such an electrolyte is used, the decomposition of the electrolyte can be more effectively suppressed even when the charging voltage is increased.
(7) Preferably, the first alkali metal ion is at least one ion selected from the group consisting of a lithium ion and a sodium ion, and the second alkali metal ion is the same as the first alkali metal ion. The first alkali metal ion is reversibly carried on the negative electrode active material as a result of charging and discharging. When the first alkali metal ion is at least one ion selected from the group consisting of a lithium ion and a sodium ion, the first alkali metal ion can be smoothly occluded into the negative electrode active material during charging and can be released from the negative electrode active material during discharging. Furthermore, when the second alkali metal ion is the same as the first alkali metal ion, charging and discharging can be stably performed.
(8) The upper-limit voltage for charging and discharging is preferably more than 4.2 V and 5 V or less. In the alkali metal ion capacitor having such an upper-limit voltage, the capacity of the positive electrode active material can be more effectively utilized, which can further increase the capacity of the alkali metal ion capacitor.
(9) The negative electrode active material preferably contains at least one material selected from the group consisting of hard carbon and a carbonaceous material having a graphite crystal structure. Such a negative electrode active material has good occlusion and release properties of the alkali metal ion, and thus charging and discharging can be more smoothly performed.
(10) The ratio Cₙ/Cp of a reversible capacity Cₙ of the negative electrode to a reversible capacity Cₚ of the positive electrode is 1.2 or more. When the ratio of the reversible capacity is in the above range, the negative electrode can be pre-doped with a sufficient amount of the alkali metal ion. Thus, the capacity or voltage of the alkali metal ion capacitor can be more effectively increased.

In another embodiment of the present invention, (11) a method for producing an alkali metal ion capacitor includes:
a first step of preparing an electrolyte having alkali metal ion conductivity and containing an ionic liquid and an alkali metal salt which is a salt of a first alkali metal ion serving as a first cation and a first anion, a total content of the alkali metal salt and the ionic liquid being 60 mass% or more;
a second step of accommodating, in a cell case, the electrolyte and an electrode group that includes a positive electrode serving as a first electrode containing a positive electrode active material, a negative electrode serving as a second electrode containing a negative electrode active material, a separator disposed between the positive electrode and the negative electrode, and a third electrode electrically connected to the negative electrode and containing a second alkali metal; and
a third step of causing a second alkali metal ion to elute from the third electrode at a temperature of 70°C to 125°C while the electrode group is immersed in the electrolyte to pre-dope the negative electrode active material with the second alkali metal ion until a potential of the negative electrode reaches 0.05 V or less with respect to the second alkali metal, thereby producing an alkali metal ion capacitor having an upper-limit voltage for charging and discharging of more than 3.8 V,
wherein the positive electrode active material contains a material that reversibly carries at least the first anion, and
the negative electrode active material contains a material that reversibly carries the first alkali metal ion.

In such a production method, the negative electrode active material can be pre-doped with the second alkali metal ion at a relatively high temperature of 70°C to 125°C. Therefore, pre-doping can be uniformly and quickly performed. Since the pre-doping can be uniformly performed with the second alkali metal ion, the potential of the negative electrode can be sufficiently decreased even when the pre-doping amount is small.

In still another embodiment of the present invention, (12) a method for charging and discharging an alkali metal ion capacitor includes:
a step of charging and discharging an alkali metal ion capacitor at an upper-limit voltage of more than 3.8 V,
wherein the alkali metal ion capacitor includes a positive electrode containing a positive electrode active material, a negative electrode containing a negative electrode active material, a separator disposed between the positive electrode and the negative electrode, and an electrolyte,
the electrolyte has alkali metal ion conductivity and contains an alkali metal salt and an ionic liquid, a total content of the alkali metal salt and the ionic liquid in the electrolyte being 60 mass% or more,
the alkali metal salt is a salt of a first alkali metal ion serving as a first cation and a first anion,
the positive electrode active material contains a material that reversibly carries at least the first anion,
the negative electrode active material contains a material that reversibly carries the first alkali metal ion, and
the negative electrode active material is pre-doped with a second alkali metal ion until a potential of the negative electrode reaches 0.05 V or less with respect to a second alkali metal.

According to the embodiments of the present invention, even when charging is performed to an upper-limit voltage of more than 3.8 V, the decomposition of the electrolyte is effectively suppressed and thus charging and discharging can be reversibly performed in a stable manner. Since the charging voltage can be increased, the high capacity of the alkali metal ion capacitor can be effectively utilized.

### [Details of embodiments of invention]

Specific examples of the alkali metal ion capacitor, the method for producing the capacitor, and the method for charging and discharging the capacitor according to embodiments of the present invention will be described below with reference to the attached drawings. The present invention is indicated by the appended claims without being limited by such examples. The present invention is intended to embrace equivalents of the scope of the claims and all modifications within the scope of the claims.

### (Method for charging and discharging alkali metal ion capacitor)

Hereafter, constituent components of the alkali metal ion capacitor will be further described in detail.

### (Electrolyte)

The electrolyte contains an alkali metal salt and an ionic liquid and has alkali metal ion conductivity.

The alkali metal salt is a salt of a first alkali metal ion (first cation) and a first anion. The first alkali metal ion is reversibly carried (specifically, reversibly occluded and released or reversibly intercalated and deintercalated) on a negative electrode active material as a result of charging and discharging, and serves as a charge carrier in a charging and discharging reaction. That is, the electrolyte containing a first alkali metal ion exhibits alkali metal ion conductivity (i.e., first alkali metal ion conductivity).

The electrolyte may contain one or more alkali metal salts. When the electrolyte contains two or more alkali metal salts, the two or more alkali metal salts are salts constituted by different types of first alkali metal ions and/or first anions.

The first alkali metal ion is, for example, at least one ion selected from the group consisting of a lithium ion, a sodium ion, a potassium ion, a rubidium ion, and a cesium ion. Among them, at least one ion selected from the group consisting of a lithium ion and a sodium ion is preferably used. By using such a first alkali metal ion, the first alkali metal ion can be smoothly occluded into the negative electrode active material during charging and can be released from the negative electrode active material during discharging.

Alkali metal ion capacitors containing an electrolyte having lithium ion conductivity are also referred to as lithium ion capacitors. Alkali metal ion capacitors containing an electrolyte having sodium ion conductivity are also referred to as sodium ion capacitors.

Examples of the first anion constituting the alkali metal salt include anions of fluorine-containing acids [e.g., fluorine-containing phosphate anions such as a hexafluorophosphate ion (PF₆⁻) and fluorine-containing borate anions such as a tetrafluoroborate ion (BF₄⁻)], anions of chlorine-containing acids [e.g., a perchlorate ion (ClO₄⁻)], anions of oxoacids having an oxalate group [e.g., an oxalatoborate ion such as bis(oxalato)borate ion (B(C₂O₄)₂⁻) and an oxalatoborate ion such as a tris(oxalato)phosphate ion (P(C₂O₄)₃⁻)], fluoroalkanesulfonate anions [e.g., a trifluoromethanesulfonate ion (CF₃SO₃⁻)], and bis(sulfonyl)amide anions.

Examples of the bis(sulfonyl)amide anion include bis(fluorosulfonyl)amide anions [e.g., a bis(fluorosulfonyl)amide anion (N(SO₂F)₂⁻)], (fluorosulfonyl)(perfluoroalkylsulfonyl)amide anions [e.g., a (fluorosulfonyl)(trifluoromethylsulfonyl)amide anion ((FSO₂)(CF₃SO₂)N⁻)], and bis(perfluoroalkylsulfonyl)amide anions [e.g., a bis(trifluoromethylsulfonyl)amide anion (N(SO₂CF₃)₂⁻) and a bis(pentafluoroethylsulfonyl)amide anion (N(SO₂C₂F₅)₂⁻)]. The number of carbon atoms of the perfluoroalkyl group is preferably 1 to 8 and more preferably 1, 2, or 3.

The first anion is preferably a bis(sulfonyl)amide anion and/or a fluorine-containing borate anion such as a tetrafluoroborate ion. Among the first anions, a bis(fluorosulfonyl)amide anion (FSA⁻), a bis(perfluoroalkylsulfonyl)amide anion (PFSA⁻) such as a bis(trifluoromethylsulfonyl)amide anion (TFSA⁻), a bis(pentafluoroethylsulfonyl)amide anion, and/or a (fluorosulfonyl)(trifluoromethylsulfonyl)amide anion are preferred. The first anion is particularly preferably FSA⁻.

The content of a salt of the first alkali metal ion and the bis(sulfonyl)amide anion in the alkali metal salt is preferably 65 mol% or more and more preferably 70 mol% or more or 80 mol% or more. The content of a salt of the first alkali metal ion and the bis(sulfonyl)amide anion in the alkali metal salt is 100 mol% or less, and the alkali metal salt may be constituted by only a salt of the first alkali metal ion and the bis(sulfonyl)amide anion. When the content of the salt of the first alkali metal ion and the bis(sulfonyl)amide anion in the alkali metal salt is within the above range, the viscosity and melting point of the electrolyte can be decreased, which allows smooth movement of ions.

The ionic liquid contains a molten salt of a second cation and a second anion. The ionic liquid may contain one molten salt or two or more molten salts constituted by two or more different types of second cations and/or second anions.

The second anion is preferably a bis(sulfonyl)amide anion. The bis(sulfonyl)amide anion can be selected from those exemplified for the first anion. The second anion may be the same as the first anion or may be different from the first anion.

In alkali metal ion capacitors such as lithium ion capacitors, there is no alkali metal ion source except for the electrolyte unlike lithium ion secondary batteries in which lithium ions are supplied from a positive electrode. Therefore, ease of movement of alkali metal ions considerably affects the charge-discharge properties. For example, the occlusion of alkali metal ions into the negative electrode active material may be delayed because the degree of interaction with alkali metal ions serving as charge carriers in a charging and discharging reaction varies depending on the types of anions constituting the ionic liquid and the alkali metal salt. Furthermore, the second cation constituting the ionic liquid may be occluded into the negative electrode active material while the occlusion of alkali metal ions is delayed. The second cation constituting the ionic liquid may be irreversibly occluded into the negative electrode active material. In other words, the second cation once occluded is seemingly not released even when a charging reaction proceeds, which may decrease the discharge capacity. If the second cation is irreversibly occluded into the negative electrode active material, the discharge capacity sometimes decreases. Even when the charging voltage is increased, the capacity of the alkali metal ion capacitor sometimes cannot be sufficiently increased.

In lithium ion secondary batteries, a large amount of lithium ions is supplied from the positive electrode during charging, and thus the occlusion of lithium ions into the negative electrode active material is not inhibited. Therefore, the use of an ionic liquid does not pose the above-described problems.

In alkali metal ion capacitors, however, alkali metal ions are not supplied from the positive electrode. Therefore, when the second cation is irreversibly occluded into the negative electrode active material, this problem readily comes to the surface.

For the purpose of suppressing the irreversible occlusion of the second cation into the negative electrode active material, the first anion constituting the alkali metal salt is preferably the same as the second anion constituting the ionic liquid. When the first anion and the second anion are the same, the irreversible occlusion of the second cation constituting the ionic liquid into the negative electrode active material is easily suppressed. The reason for this is unclear, but this may occur because the difference in the degree of interaction with the first alkali metal ion serving as a carrier ion is eliminated. The use of an electrolyte whose first anion and second anion are the same advantageously leads to the occlusion of the first alkali metal ion into the negative electrode active material. Therefore, even when charging is performed to a high voltage, charging and discharging can be more easily performed in a stable manner.

The second cation constituting the ionic liquid is, for example, an inorganic cation different from the first alkali metal ion or an organic cation. Examples of the inorganic cation include the alkali metal ions exemplified for the first alkali metal ion, alkaline-earth metal ions (e.g., magnesium ion and calcium ion), and an ammonium ion. The second cation may be an inorganic cation as long as the second cation is different from the first alkali metal ion, but is preferably an organic cation. The ionic liquid may contain a single second cation or may contain two or more second cations in combination.

Examples of the organic cation contained in the second cation include cations derived from aliphatic amines, alicyclic amines, and aromatic amines (e.g., quaternary ammonium cations); nitrogen-containing onium cations such as cations having a nitrogen-containing heterocycle (i.e., cations derived from cyclic amines); sulfur-containing onium cations; and phosphorus-containing onium cations.

In addition to the quaternary ammonium cations, nitrogen-containing organic onium cations including pyrrolidine, pyridine, or imidazole as a nitrogen-containing heterocycle skeleton are particularly preferred.

Examples of the quaternary ammonium cations include tetraalkylammonium cations such as a tetramethylammonium cation, a tetraethylammonium cation (TEA⁺), an ethyltrimethylammonium cation, a hexyltrimethylammonium cation, and a methyltriethylammonium cation (TEMA⁺).

The organic onium cation having a pyrrolidine skeleton is preferably an onium cation having two alkyl groups on a single nitrogen atom constituting the pyrrolidine ring. Examples of such an organic onium cation include a 1,1-dimethylpyrrolidinium cation, a 1,1-diethylpyrrolidinium cation, a 1-ethyl-1-methylpyrrolidinium cation, a 1-methyl-1-propylpyrrolidinium cation (MPPY⁺), a 1-butyl-1-methylpyrrolidinium cation (MBPY⁺), and a 1-ethyl-1-propylpyrrolidinium cation.

The organic onium cation having a pyridine skeleton is preferably an onium cation having a single alkyl group on a single nitrogen atom constituting the pyridine ring. Examples of such an organic onium cation include 1-alkylpyridinium cations such as a 1-methylpyridinium cation, a 1-ethylpyridinium cation, and a 1-propylpyridinium cation.

The organic onium cation having an imidazole skeleton is preferably an onium cation having a single alkyl group on each of two nitrogen atoms constituting the imidazole ring. Examples of such an organic onium cation include a 1,3-dimethylimidazolium cation, a 1-ethyl-3-methylimidazolium cation (EMI⁺), a 1-methyl-3-propylimidazolium cation, a 1-butyl-3-methylimidazolium cation (BMI⁺), a 1-ethyl-3-propylimidazolium cation, and a 1-butyl-3-ethylimidazolium cation. Among them, an imidazolium cation having a methyl group and an alkyl group having 2 to 4 carbon atoms, such as EMI⁺ or BMI⁺, is preferred.

The second cation preferably contains an organic onium cation having an imidazole skeleton because the reactivity with a positive electrode active material is low and the resistance to decomposition is high even when the charging voltage is increased. The second cation particularly preferably contains EMI⁺ from the viewpoint of ion conductivity. Specific examples of a salt of the second cation and the second anion include EMIFSA, EMITFSA, and EMIPFSA. The ionic liquid preferably contains at least EMIFSA because such an ionic liquid does not readily inhibit the occlusion of the alkali metal ion, has high resistance to decomposition, and can dissolve an alkali metal salt well. For example, the ionic liquid may contain only EMIFSA or may contain EMIFSA and a salt of an organic cation other than the EMI⁺ cation, such as MPPYFSA.

The concentration of the alkali metal salt in the electrolyte is, for example, more than 0.8 mol/L and less than 5.5 mol/L. The concentration of the alkali metal salt is preferably 0.9 mol/L or more or 1 mol/L or more, more preferably 1.5 mol/L or more or 2 mol/L or more, and particularly preferably 2.5 mol/L or more or 3 mol/L or more. The concentration of the alkali metal salt is preferably 5 mol/L or less and more preferably 4.5 mol/L or less or 4 mol/L or less. These lower limits and the upper limits can be freely combined with each other. The concentration of the alkali metal salt in the electrolyte may be, for example, 1 mol/L to 5 mol/L, 2.5 mol/L to 5 mol/L, or 3 mol/L to 5 mol/L.

When the concentration of the alkali metal salt is within the above range, the occlusion of a cation(specifically, a second cation) other than the first alkali metal ion into the negative electrode active material can be more effectively suppressed. Furthermore, the influence exerted by loss of current and/or resistance during charging and discharging is easily reduced. Moreover, since an unnecessary increase in the viscosity of the electrolyte can be suppressed, high ion conductivity can be effectively achieved. Even when the upper-limit voltage for charging is increased, charging and discharging can be more effectively performed in a stable manner. This provides an advantage in terms of increasing the capacity or output of the alkali metal ion capacitor. In addition, even if the electrode is thick and/or the filling amount of an electrode active material is large, charging and discharging can be efficiently performed.

The electrolyte may contain publicly known components contained in an electrolyte of alkali metal ion capacitors, such as an organic solvent and an additive. However, when the electrolyte contains an organic solvent, gas tends to be generated due to decomposition when the charging voltage is increased. Therefore, the content of components other than the alkali metal salt and the ionic liquid is preferably as low as possible.

Specifically, the total content of the alkali metal salt and the ionic liquid in the electrolyte is 60 mass% or more and preferably 65 mass% or more or 70 mass% or more and may be 80 mass% or more or 90 mass% or more. The total content of the alkali metal salt and the ionic liquid in the electrolyte is 100 mass% or less. In particular, the electrolyte preferably does not contain an organic solvent such as a carbonate, and the total content of the alkali metal salt and the ionic liquid (and an additive when necessary) in the electrolyte may be 100 mass%. When the total content of the alkali metal salt and the ionic liquid is high, the decomposition of the electrolyte tends to be more effectively suppressed even when the charging voltage is increased. Therefore, charging and discharging can be performed in a more stable manner.

A large amount of water in the electrolyte makes it difficult to increase the upper-limit voltage for charging. Therefore, the amount of water in the electrolyte is preferably 300 ppm or less (e.g., 150 ppm or less) and more preferably 40 ppm or less. The amount of water in the electrolyte can be decreased by drying components (e.g., lithium salt and ionic liquid) in the electrolyte or drying the positive electrode and/or the negative electrode (or the active material thereof). The drying can be performed in a reduced pressure and may be performed under heating, if necessary.

### (Positive electrode)

The positive electrode contains a positive electrode active material. The positive electrode active material contains a material that reversibly carries at least a first anion. The positive electrode may contain a positive electrode active material and a positive electrode current collector on which the positive electrode active material is carried. The positive electrode may contain a positive electrode mixture containing a positive electrode active material and a positive electrode current collector on which the positive electrode mixture is carried.

The positive electrode current collector is preferably made of aluminum, an aluminum alloy, or the like. Examples of the aluminum alloy include an aluminum-iron alloy, an aluminum-copper alloy, an aluminum-manganese alloy, an aluminum-silicon alloy, an aluminum-magnesium alloy, an aluminum-magnesium-silicon alloy, an aluminum-zinc alloy, and an aluminum-nickel alloy.

The positive electrode current collector may be a metal foil, but is preferably a metal porous body from the viewpoint of increasing the capacity of the alkali metal ion capacitor.

The metal porous body may be a porous metal foil, but is preferably a metal porous body having a skeleton with a three-dimensional network structure. The metal porous body having a skeleton with a three-dimensional network structure may be a porous body made of metal (specifically, aluminum or an aluminum alloy) and having a skeleton with a three-dimensional network structure in which a plurality of fibrous portions (or rod-shaped portions) are three-dimensionally connected to each other.

The metal porous body having a skeleton with a three-dimensional network structure can be formed by coating a porous body made of resin and having continuous voids (e.g., resin foam and nonwoven fabric made of resin) with a metal (specifically, aluminum and/or an aluminum alloy) for a current collector by performing plating or the like. The resin in the skeleton is desirably removed by being decomposed or dissolved through a heat treatment or the like.

The obtained metal porous body has a shape corresponding to the shape of the resin foam and includes continuous voids (i.e., interconnected pores) formed by connecting a large number of cellular pores included in individual metal porous bodies.

More specifically, the metal porous body includes a plurality of fibrous portions. Preferably, the fibrous portions define the shape of each cellular pore and are three-dimensionally connected to each other to form a skeleton with a three-dimensional network structure. The skeleton includes a plurality of cellular pores surrounded by the connected fibrous portions. An opening (or window) having a substantially polygonal shape is normally formed between the adjacent pores. This opening interconnects the adjacent pores with each other. Thus, the metal porous body has continuous voids.

In a preferred embodiment, the metal porous body having a skeleton with a three-dimensional network structure has a hollow inside the skeleton (i.e., the inside is hollow) as a result of the removal of the resin porous body. The hollow in the skeleton of the metal porous body may have a shape of interconnected pores. Such a skeleton has a tunnel-like shape or a tubular shape. The metal porous body having a hollow skeleton has a bulky three-dimensional structure, but is extremely lightweight. The width (specifically, width W_{f} below) of the hollow inside the skeleton is, for example, 0.5 µm to 5 µm and preferably 1 µm to 4 µm or 2 µm to 3 µm on average.

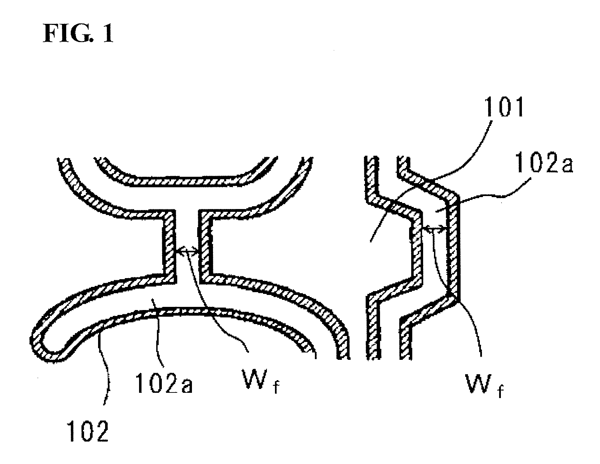

Figure 1 is a sectional view schematically illustrating a part of a metal porous body having a hollow skeleton with a three-dimensional network structure. The metal porous body includes a plurality of fibrous portions 102 and cellular pores 101 surrounded by the plurality of fibrous portions 102. An opening (not illustrated) is formed between pores 101 adjacent to each other. The adjacent pores are interconnected with each other through the opening to form continuous voids. Tunnel-shaped or tubular hollows 102a having a width W_{f} are formed inside the skeleton (i.e., fibrous portions 102 that form the skeleton) of the aluminum porous body.

The porosity of the metal porous body is, for example, 30 vol% to 99 vol%, preferably 50 vol% to 98 vol%, and more preferably 80 vol% to 98 vol% or 90 vol% to 98 vol%. When the porosity is within the above range, a sufficient amount of positive electrode active material is easily carried, which easily achieves high capacity. The average pore diameter (average diameter of cellular pores interconnected with each other) in the skeleton with a three-dimensional network structure is, for example, 50 µm to 1000 µm, preferably 100 µm to 900 µm, and more preferably 350 µm to 900 µm. When the average pore diameter is within the above range, the positive electrode active material is easily carried and the retention of the carried positive electrode active material is easily improved. The average pore diameter is preferably smaller than the thickness of the current collector (or positive electrode).

The positive electrode is formed by carrying a positive electrode active material onto a current collector (more specifically, filling a current collector with a positive electrode mixture), and then normally being dried and compressed (or rolled) in a thickness direction of the current collector. As a result of the compression, the porosity and average pore diameter of the current collector changes. The above-described ranges of the porosity and average pore diameter of the metal porous body having a skeleton with a three-dimensional network structure are the ranges of the porosity and average pore diameter before the positive electrode active material is carried and before the rolling.

When the above-described metal porous body is used as a current collector, the current collector has a very high porosity and a large specific surface area. That is, a large amount of active material can be attached to the surface of the current collector in a large area including an area of the surface in the voids. Furthermore, since the contact area between the current collector and the active material and the porosity can be increased while the voids are filled with a large amount of active material, the active material can be effectively used. High conductivity is easily achieved by using the metal porous body as a current collector. Therefore, the metal porous body is effectively used to increase the output and/or capacity of the capacitor.

The specific surface area (BET specific surface area) of the metal porous body having a skeleton with a three-dimensional network structure is, for example, 100 cm²/g to 700 cm²/g, preferably 150 cm²/g to 650 cm²/g, and more preferably 200 cm²/g to 600 cm²/g.

The positive electrode active material contains a material that reversibly carries at least the first anion. The positive electrode active material is preferably a material that reversibly carries the first anion and the first cation. Examples of the material that reversibly carries at least the first anion include materials that adsorb and desorb at least the first anion and materials that occlude and release (or intercalate and deintercalate) an anion. The former is a material that causes a non-Faradaic reaction during charging and discharging. The latter is a material that causes a Faradaic reaction during charging and discharging. Among them, materials that adsorb and desorb at least the first anion (preferably the first anion and the first cation) can be preferably used.

Preferred examples of the material include porous carbon materials (also called first carbon materials) such as activated carbon, mesoporous carbon, microporous carbon, and carbon nanotube. The porous carbon material may be subjected to an activation treatment or may be used without an activation treatment. These porous carbon materials may be used alone or in combination of two or more. Among the porous carbon materials, for example, activated carbon and microporous carbon are preferably used.

The positive electrode active material may contain an active material other than the first carbon material. The content of the first carbon material in the positive electrode active material is preferably more than 50 mass% and may be 80 mass% or more or 90 mass% or more. The content of the first carbon material in the positive electrode active material is 100 mass% or less. In particular, the content of the activated carbon and the microporous carbon in the positive electrode active material is preferably within the above range. The case where the positive electrode active material contains only the first carbon material (in particular, activated carbon and/or microporous carbon) is also preferred.

The microporous carbon is, for example, a publicly known microporous carbon used for alkali metal ion capacitors such as lithium ion capacitors. For example, a microporous carbon obtained by heating a metal carbide such as silicon carbide or titanium carbide in an atmosphere containing chlorine gas may be used.

The activated carbon is, for example, a publicly known activated carbon used for alkali metal ion capacitors such as lithium ion capacitors. Examples of a raw material for activated carbon include wood, coconut shells, spent liquor, coal or coal pitch obtained by thermal cracking of coal, heavy oil or petroleum pitch obtained by thermal cracking of heavy oil, and a phenolic resin. The carbonized material is then generally activated.

The average particle diameter (the median diameter in the volume-based particle size distribution, the same applies hereafter) of the activated carbon is not particularly limited, and preferably 20 µm or less and more preferably 3 µm to 15 µm. The specific surface area of the activated carbon is not particularly limited, and preferably 800 m²/g to 3000 m²/g and more preferably 1500 m²/g to 3000 m²/g. When the specific surface area is within the above range, the electrostatic capacity of the alkali metal ion capacitor is advantageously increased and the internal resistance can be decreased.

The positive electrode preferably includes a positive electrode active material and a positive electrode current collector on which the positive electrode active material is carried.

The positive electrode active material may be carried on the positive electrode current collector by being fixed, attached, and/or retained, but is preferably carried by filling the positive electrode current collector with a positive electrode mixture containing the positive electrode active material.

The positive electrode mixture contains the positive electrode active material as an essential component and may contain a conductive assistant and/or a binder as an optional component. When the positive electrode mixture contains a conductive assistant, the conductivity of the positive electrode can be further improved. When the positive electrode mixture contains a binder, stronger bonds can be formed between positive electrode active material particles, between positive electrode active material particles and the conductive assistant, and positive electrode active material particles or the conductive assistant and the positive electrode current collector.

A conductive layer is formed by attaching at least part of the conductive assistant used for the positive electrode to the surface of the current collector, and the positive electrode active material (or the positive electrode mixture) may be carried on the positive electrode current collector so as to cover the conductive layer.

The type of conductive assistant is not particularly limited. Examples of the conductive assistant include carbon black such as acetylene black and Ketjenblack, graphite (e.g., natural graphite such as flaky graphite and earthy graphite, and synthetic graphite), conductive compounds such as ruthenium oxide, and conductive fibers such as carbon fiber and metal fiber. These conductive assistants may be used alone or in combination of two or more. For the purpose of easily achieving high conductivity and high capacity, the amount of the conductive assistant is, for example, 1 part by mass to 20 parts by mass, preferably 2 parts by mass to 20 parts by mass, and more preferably 3 parts by mass to 6 parts by mass relative to 100 parts by mass of the positive electrode active material.

The type of binder is not particularly limited. Examples of the binder include fluororesins such as polyvinylidene fluoride (PVDF) and polytetrafluoroethylene; chlorine-containing vinyl resins such as polyvinyl chloride; polyolefin resins; rubber polymers such as styrene-butadiene rubber; polyvinylpyrrolidone and polyvinyl alcohol; cellulose derivatives [e.g., cellulose ethers (carboxyalkyl cellulose and alkali metal salts thereof, such as carboxymethyl cellulose and sodium salts thereof)]. These binders may be used alone or in combination of two or more.

The amount of the binder is not particularly limited. For the purpose of easily achieving good binding properties and high capacity, the amount of the binder is, for example, selected from the range of about 0.5 parts by mass to 15 parts by mass relative to 100 parts by mass of the positive electrode active material and is preferably 1 part by mass to 12 parts by mass and more preferably 3 parts by mass to 10 parts by mass.

The positive electrode is obtained by coating or filling the positive electrode current collector with the positive electrode mixture and drying the positive electrode mixture, and optionally compressing (or rolling) the dried product.

The positive electrode mixture is normally used in the form of a slurry containing constituent components (e.g., positive electrode active material, conductive assistant, and binder) of the positive electrode mixture. The positive electrode mixture slurry is prepared by dispersing the constituent components of the positive electrode mixture in a dispersion medium. The dispersion medium is, for example, an organic solvent such as N-methyl-2-pyrrolidone (NMP) or water. The dispersion medium is removed by being dried in the production process of the positive electrode (e.g., after filling the current collector with the slurry and/or after performing rolling).

The thickness of the positive electrode is, for example, suitably selected from the range of 50 µm to 2000 µm. When a metal porous body having a skeleton with a three-dimensional network structure is used as the positive electrode current collector, the thickness of the positive electrode is, for example, 500 µm to 2000 µm and preferably 700 µm to 1500 µm. In an embodiment of the present invention, even if such a thick positive electrode is used, high capacity and high output can be achieved by using the above-described electrolyte.

### (Negative electrode)

The negative electrode contains a negative electrode active material. The negative electrode active material contains a material that reversibly carries a first alkali metal ion. The negative electrode may contain a negative electrode active material and a negative electrode current collector on which the negative electrode active material is carried.

The negative electrode current collector is preferably made of copper, a copper alloy, nickel, a nickel alloy, stainless steel, or the like.

The negative electrode current collector may be a metal foil, but is preferably a metal porous body from the viewpoint of increasing the capacity of the alkali metal ion capacitor. The same metal porous body as that described in the positive electrode current collector can be used. The metal porous body is preferably a metal porous body having a skeleton (in particular, a hollow skeleton) with a three-dimensional network structure like the case of the positive electrode current collector. For the metal porous body, the porosity, the average pore diameter, the width of the hollow inside the skeleton, the specific surface area, and the like can be suitably selected from the ranges exemplified for the metal porous body of the positive electrode current collector.

The negative electrode active material contains a material that reversibly carries a first alkali metal ion. Examples of the material that reversibly carries the first alkali metal ion include materials that adsorb and desorb an alkali metal ion and materials that occlude and release (or intercalate and deintercalate) an alkali metal ion. The former is a material that causes a non-Faradaic reaction during charging and discharging. The latter is a material that causes a Faradaic reaction during charging and discharging. Among them, materials that occlude and release (or intercalate and deintercalate) an alkali metal ion can be preferably used.

Examples of such a material include carbon materials (also referred to as second carbon materials) that occlude and release a first alkali metal ion, alkali metal titanium oxides [e.g., lithium titanium oxide (spinel lithium titanium oxide such as lithium titanate), sodium titanium oxide (e.g., sodium titanate)], silicon oxide, silicon alloys, tin oxide, and tin alloys. Examples of the second carbon material include graphitizable carbon (soft carbon), non-graphitizable carbon (hard carbon), and carbonaceous materials having a graphite crystal structure. These negative electrode active materials may be used alone or in combination of two or more. The negative electrode active material preferably has a theoretical capacity of 300 mAh/g or more. Among the negative electrode active materials, a second carbon material is preferred. In particular, a carbonaceous material (also referred to as a third carbon material) having a graphite crystal structure and/or hard carbon is preferred.

The graphite crystal structure means a layered crystal structure and is, for example, a cubic crystal structure or a rhombohedral crystal structure. Examples of the third carbon material include natural graphite (e.g., flaky graphite), synthetic graphite, and graphitized mesocarbon microbeads. These third carbon materials may be used alone or in combination of two or more.

When the negative electrode active material containing the third carbon material is used in an alkali metal ion capacitor, alkali metal ions are intercalated into a portion between layers of the graphite crystal structure of the third carbon material during charging and alkali metal ions are released from the portion between layers of the graphite crystal structure during discharging.

An average interplanar spacing d₀₀₂ of a (002) plane measured by an XRD spectrum of the third carbon material is used as an index of the degree of the development of the graphite crystal structure in the third carbon material. The third carbon material preferably has an average interplanar spacing d₀₀₂ of less than 0.337 nm. The lower limit of the average interplanar spacing d₀₀₂ is not particularly limited, but the average interplanar spacing d₀₀₂ may be, for example, 0.335 or more. When a third carbon material whose average interplanar spacing d₀₀₂ is within the above range is used, alkali metal ions can be efficiently intercalated into the graphite crystal structure during charging and can be smoothly released from the graphite crystal structure during discharging.

Unlike graphite, which has a graphite crystal structure in which carbon layer planes are stacked in layers, hard carbon has a turbostratic structure in which carbon layer planes are stacked in a state of being three-dimensionally displaced. The heat treatment of hard carbon even at high temperature (e.g., 3000°C) does not result in transformation from the turbostratic structure to the graphitic structure or the development of graphite crystallites. Therefore, hard carbon is also referred to as non-graphitizable carbon.

Although the average interplanar spacing d₀₀₂ of the third carbon material, which is classified into graphite, is as small as less than 0.337 nm as described above, the average interplanar spacing d₀₀₂ of hard carbon having a turbostratic structure is as large as, for example, 0.37 nm or more. The upper limit of the average interplanar spacing d₀₀₂ of hard carbon is not particularly limited, but the average interplanar spacing d₀₀₂ may be, for example, 0.42 nm or less. The average interplanar spacing d₀₀₂ of hard carbon may be, for example, 0.37 nm to 0.42 nm and preferably 0.38 nm to 0.4 nm.

When the alkali metal ion is carried on the hard carbon, it is believed that the alkali metal ion is intercalated into a portion between layers of the graphite crystal structure slightly contained in the hard carbon, the alkali metal ion enters the turbostratic structure (specifically, a portion other than the portion between layers of the graphite crystal structure), and/or the alkali metal ion is adsorbed onto the hard carbon and thus carried on (occluded into) the hard carbon.

Hard carbon has a turbostratic structure, and the ratio of a graphite crystal structure in hard carbon is small. Therefore, many of alkali metal ions are believed to be occluded into the hard carbon by being intercalated into a portion (e.g., voids formed in the turbostratic structure) other than the portion between layers of the graphite crystal structure and/or by being adsorbed onto the hard carbon. Thus, when the hard carbon (in particular, the hard carbon whose average interplanar spacing d₀₀₂ is within the above range) is used, the volume change during charging and discharging decreases and the degradation is easily suppressed even after charging and discharging are repeatedly performed.

Various models have been reported for the structure of hard carbon. It is believed that in the turbostratic structure, carbon layer planes are stacked in a state of being three-dimensionally displaced to form voids as described above. Thus, hard carbon has a lower average specific gravity than graphite having a crystal structure in which carbon layer planes are densely stacked in layers. Graphite has an average specific gravity of about 2.1 g/cm³ to about 2.25 g/cm³. The hard carbon has an average specific gravity of, for example, 1.7 g/cm³ or less and preferably 1.4 g/cm³ to 1.7 g/cm³ or 1.5 g/cm³ to 1.7 g/cm³. When the hard carbon has such an average specific gravity, the volume change due to occlusion and release of alkali metal ions during charging and discharging can be further reduced. Consequently, the degradation of an active material can be more effectively suppressed.

The hard carbon contains a carbonaceous material obtained by, for example, carbonizing a raw material in a solid state. The raw material carbonized in a solid state is a solid organic substance. Specific examples of the organic substance include saccharides and resins (thermosetting resins such as phenolic resins, and thermoplastic resins such as polyvinylidene chloride). Examples of saccharides include saccharides having relatively short carbohydrate chains (monosaccharides or oligosaccharides such as sucrose) and polysaccharides such as cellulose [e.g., cellulose and derivatives thereof (cellulose esters, cellulose ethers, and the like), and cellulose-containing materials such as wood and fruit shells (e.g., coconut shells)]. These raw materials may be used alone or in combination of two or more. The hard carbon is obtained by carbonizing the raw material through heating in a solid state. The carbonization can be performed, for example, at a temperature of about 500°C to 1600°C. Heating at a first temperature (e.g., 500°C or higher and lower than 800°C) and heating at a second temperature (e.g., 800°C to 1600°C) higher than the first temperature may be appropriately combined with each other. Glassy carbon is also included in the hard carbon. These hard carbons may be used alone or in combination of two or more.

The negative electrode active material may contain an active material other than the hard carbon and the third carbon material.

From the viewpoint of efficiently occluding and releasing alkali metal ions, the content of the hard carbon and/or the third carbon material in the negative electrode active material is preferably 80 mass% or more (specifically, 80 mass% to 100 mass%) and more preferably 90 mass% or more (specifically, 90 mass% to 100 mass%). The negative electrode active material may be constituted by only the hard carbon and/or the third carbon material.

The negative electrode is not particularly limited as long as it contains the above-described negative electrode active material, and may contain, for example, a binder agent and/or a conductive assistant as an optional component. As in the case of the positive electrode, a conductive layer is formed by attaching at least part of the conductive assistant used for the negative electrode to the surface of the current collector, and the negative electrode active material (or the negative electrode mixture) may be carried on the negative electrode current collector so as to cover the conductive layer.

As in the case of the positive electrode, the negative electrode is obtained by coating or filling the negative electrode current collector with the negative electrode mixture and drying the negative electrode mixture, and optionally compressing (or rolling) the dried product. The negative electrode may be obtained by forming a deposited film of the negative electrode active material on the surface of the negative electrode current collector by a gas phase method such as vapor deposition or sputtering.

The dispersion medium and the binder can be suitably selected from those exemplified for the positive electrode. The amount of the binder relative to 100 parts by mass of the negative electrode active material can be suitably selected from the above-described range of the amount of the binder relative to 100 parts by mass of the positive electrode active material.

Examples of the conductive assistant include carbon black such as acetylene black and Ketjenblack, conductive compounds such as ruthenium oxide, and conductive fibers such as carbon fiber and metal fiber. The amount of the conductive assistant relative to 100 parts by mass of the negative electrode active material can be suitably selected from the above-described range of the amount of the conductive assistant relative to 100 parts by mass of the positive electrode active material.

In the alkali metal ion capacitor, the negative electrode active material is pre-doped with a second alkali metal ion until the potential of the negative electrode reaches 0.05 V or less with respect to a second alkali metal (i.e., the oxidation-reduction potential of the second alkali metal). By pre-doping the negative electrode active material with the second alkali metal ion to such a potential, the potential of the negative electrode is sufficiently decreased. This increases the voltage of the capacitor and thus can increase the capacity of the alkali metal ion capacitor.

The second alkali metal ion can be suitably selected from those exemplified for the first alkali metal ion. The second alkali metal ion may be different from the first alkali metal ion contained in the electrolyte, but is preferably the same as the first alkali metal ion.

The negative electrode active material is doped with the second alkali metal ion in such an amount that preferably 5% to 90% and more preferably 10% to 75% of the negative electrode capacity (reversible capacity of negative electrode) Cₙ is filled with the alkali metal ion. The pre-doping with the second alkali metal ion in such an amount sufficiently decreases the negative electrode potential, and a high-voltage capacitor can be produced.

Known lithium ion capacitors are designed so as to have a negative electrode capacity Cₙ which is much higher than the positive electrode capacity (reversible capacity of positive electrode) Cₚ. One of the reasons for this is that achieving the ability of the positive electrode to adsorb and desorb an anion makes it difficult to form a thick layer containing the positive electrode active material. As the thickness of the layer containing the positive electrode active material increases, the adsorption and desorption (charging and discharging) of an anion by the positive electrode active material in a surface layer portion become more difficult. This decreases the positive electrode utilization ratio (the amount of charge actually accumulated/the theoretical value of the amount of accumulable charge calculated from the amount of the active material). The other reason is that the negative electrode active material needs to be pre-doped with a relatively large amount of lithium to decrease the negative electrode potential. Therefore, the negative electrode capacity Cₙ of known lithium ion capacitors is about more than ten times the positive electrode capacity Cₚ.

According to an embodiment of the present invention, charging and discharging can be reversibly performed in a stable manner to an upper-limit voltage of more than 3.8 V, and thus the capacity of the positive electrode can be effectively increased. Therefore, the ratio Cₙ/Cₚ of the negative electrode capacity Cₙ to the positive electrode capacity Cₚ can be set to a relatively low value.

Herein, the positive electrode capacity Cₚ is a value obtained by subtracting the irreversible capacity from a theoretical value of the amount of accumulable charge calculated from the amount of the positive electrode active material contained in the positive electrode. The negative electrode capacity Cₙ is a value obtained by subtracting the irreversible capacity from a theoretical value of the amount of accumulable charge calculated from the amount of the negative electrode active material contained in the negative electrode. Cₚ can also be evaluated based on the discharge capacity measured in an EDLC that uses a positive electrode. Cₙ can also be evaluated based on the discharge capacity measured in a half cell that uses a negative electrode and an alkali metal.

The Cₙ/Cₚ ratio is, for example, more than 1.1, preferably 1.2 or 1.3 or more, and more preferably 2 or more or 3 or more. The Cₙ/Cₚ ratio is, for example, less than 12.5, preferably 10 or less, and more preferably 9 or less. The lower limits and the upper limits can be suitably combined with each other. The Cₙ/Cₚ ratio may be, for example, 1.2 to 10 or 3 to 10.

When the Cₙ/Cp ratio is within the above-described range, the negative electrode can be pre-doped with a sufficient amount of alkali metal ions, and the voltage of the capacitor can be more effectively increased. Furthermore, the initial voltage is easily increased, which is advantageous because the capacity of the capacitor can be easily increased. Moreover, there is no need to increase the volume of the positive electrode or the negative electrode to a volume larger than necessary. Therefore, the decrease in the capacity density of the capacitor is easily suppressed while high discharge capacity is achieved.

The thickness of the negative electrode can be suitably selected from the range of the thickness of the positive electrode.

### (Separator)

A separator (first separator) has ionic permeability and is disposed between the positive electrode and the negative electrode, thereby physically separating the electrodes to prevent a short-circuit. The separator has a porous structure and retains an electrolyte in the pores, which allows permeation of ions. The separator can be made of, for example, polyolefin such as polyethylene or polypropylene, polyester such as polyethylene terephthalate, polyamide, polyimide, cellulose, or glass fiber.

The average pore size of the separator is not particularly limited, and is, for example, about 0.01 µm to 5 µm. The thickness of the separator is not particularly limited, and is, for example, about 10 µm to 100 µm.

From the viewpoint of achieving high output while suppressing the occurrence of an internal short-circuit, the thickness of the separator is 4% or more and preferably 15% or less relative to the total thickness of the positive electrode and the negative electrode that are in contact with the surfaces of the separator, and may be 12% or less relative to the total thickness. From the same viewpoint, the porosity of the separator is, for example, 40 vol% to 80 vol% and preferably 50 vol% to 70 vol%.

When the alkali metal ion capacitor has the above-described structure, the alkali metal ion capacitor can be charged at a high upper-limit voltage. Thus, the capacity of the positive electrode active material can be effectively utilized, and the capacity of the alkali metal ion capacitor can be considerably increased.

The charging and discharging method according to an embodiment of the present invention includes a step of charging and discharging the alkali metal ion capacitor at an upper-limit voltage of more than 3.8 V.

The upper-limit voltage for charging and discharging (i.e., charging) of the alkali metal ion capacitor is more than 3.8 V, preferably 3.9 V or more, and more preferably more than 4.2 V. The upper-limit voltage may be preferably 4.3 V or more or 4.4 V or more and more preferably 4.5 V or more. The upper-limit voltage may be more than 5 V, but is preferably 5 V or less and may be 4.9 V or less or 4.6 V or less. These lower limits and the upper limits can be suitably combined with each other. The upper-limit voltage for charging may be, for example, more than 4.2 V and 5 V or less, 4.3 V to 5 V, or 4.5 V to 5 V.

The upper-limit voltage for charging and discharging of the capacitor is a property of capacitors that cannot be freely determined by users and the like but is determined at the time of designing the capacitor in accordance with the constituent elements of the capacitor. The capacitor is normally charged and discharged within the predetermined voltage range. Specifically, the capacitor is charged to the predetermined upper-limit voltage, and the capacitor is discharged to the predetermined end-of-discharge voltage. Charging and discharging are normally controlled by a charge control unit and a discharge control unit in a charging and discharging system including a capacitor. In an embodiment of the present invention, there is also provided a charging and discharging system including an alkali metal ion capacitor, a charge control unit configured to control the charging of the alkali metal ion capacitor, and a discharge control unit configured to control the discharging of the alkali metal ion capacitor. The discharge control unit may include a loading device that consumes electric power supplied from the alkali metal ion capacitor.

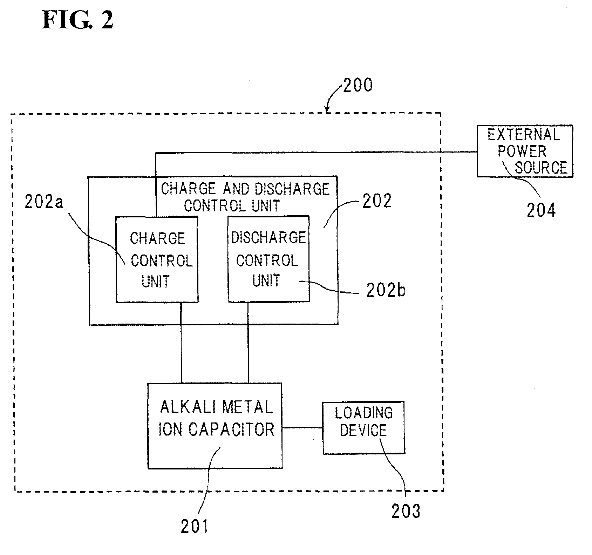

Figure 2 schematically illustrates a charging and discharging system according to an embodiment of the present invention.

A charging and discharging system 200 includes an alkali metal ion capacitor 201, a charge and discharge control unit 202 configured to control the charging and discharging of the alkali metal ion capacitor 201, and a loading device 203 that consumes the electric power supplied from the alkali metal ion capacitor 201. The charge and discharge control unit 202 includes a charge control unit 202a configured to control the current and/or voltage when the alkali metal ion capacitor 201 is charged and a discharge control unit 202b configured to control the current and/or voltage when the alkali metal ion capacitor 201 is discharged. The charge control unit 202a is connected to an external power source 204 and the alkali metal ion capacitor 201. The discharge control unit 202b is connected to the alkali metal ion capacitor 201. The loading device 203 is connected to the alkali metal ion capacitor 201.

The alkali metal ion capacitor can be operated in a wide temperature range. The operating temperature can be suitably set in the range of, for example, -40°C to 125°C.

### (Method for producing alkali metal ion capacitor)

The alkali metal ion capacitor can be produced through a first step of preparing an electrolyte, a second step of accommodating, in a cell case, the electrolyte and an electrode group including a positive electrode (first electrode), a negative electrode (second electrode), a separator disposed between the electrodes, and a third electrode containing an alkali metal, and a third step of pre-doping a negative electrode active material with a second alkali metal ion at a particular temperature to produce an alkali metal ion capacitor.

### (First step)

In the first step, an electrolyte is prepared. The electrolyte can be prepared by a publicly known method in which, for example, constituent components are mixed with each other. The electrolyte is preferably prepared by dissolving an alkali metal salt in an ionic liquid.

The constituent components are preferably mixed with each other at a temperature higher than or equal to the melting point of a salt constituting the ionic liquid.

### (Second step)

In the second step, an electrode group is formed, and the electrode group is accommodated in a cell case together with the electrolyte prepared in the first step. After the electrode group and the electrolyte are accommodated in the cell case, the opening of the cell case is normally sealed.

The electrode group accommodated in the cell case includes a positive electrode (first electrode), a negative electrode (second electrode), a separator disposed between the positive electrode and the negative electrode, and a third electrode electrically connected to the negative electrode and containing an alkali metal. The third electrode is used as an alkali metal ion source for pre-doping the negative electrode with an alkali metal ion (second alkali metal ion) in a third step. The negative electrode incorporated into the electrode group is a negative electrode in which the negative electrode active material is not yet pre-doped with an alkali metal ion and is also referred to as a negative electrode precursor.

The third electrode contains a material that releases an alkali metal, such as an alkali metal (e.g., metal lithium and metal sodium), an alkali metal alloy (e.g., an alloy of an alkali metal and aluminum, tin, and/or silicon), a metal oxide that can release an alkali metal (e.g., lithium cobaltate or lithium titanate when the alkali metal is lithium, and sodium titanate when the alkali metal is sodium). The third electrode may be a metal foil containing an alkali metal or an alkali metal alloy or may include a current collector and a material that releases an alkali metal and is carried on the current collector. The alkali metal contained in the third electrode is the same as the second alkali metal. During pre-doping, the second alkali metal ion is caused to elute from the third electrode and occluded into the negative electrode.

The current collector included in the third electrode is made of a material that can be suitably selected from the materials for the negative electrode current collector. A metal porous body such as a metal foil or a punched metal can be used as the current collector. The third electrode including the current collector can be obtained by coating the current collector with an alkali metal or an alkali metal alloy by plating or the like or by pressure-bonding a foil of an alkali metal or an alkali metal alloy to the current collector.

The third electrode may be electrically connected to the negative electrode by being pressure-bonded to the negative electrode. Alternatively, the third electrode may be electrically connected to the negative electrode by disposing a separator (second separator) between the negative electrode and the third electrode and connecting leads, which are connected to the negative electrode and the third electrode, to each other outside the cell case. The second separator can be suitably selected from those exemplified for the first separator.

The electrolyte may be poured into the cell case after the electrode group is accommodated into the cell case. Alternatively, the electrolyte may be impregnated into the electrode group in advance, and then the electrode group impregnated with the electrolyte may be accommodated into the cell case.

### (Third step)

In the third step, the second alkali metal ion (also simply referred to as an alkali metal ion) is caused to elute from the third electrode to pre-dope the negative electrode active material with the second alkali metal ion, thereby completing the negative electrode in the cell case. Thus, an alkali metal ion capacitor having an upper-limit voltage for charging and discharging of more than 3.8 V can be produced.

The pre-doping with the alkali metal ion is performed with the electrode group being immersed in the electrolyte.

In the third step, the pre-doping with the alkali metal ion is performed at a temperature of 70°C or higher and 125°C or lower. By performing pre-doping at a relatively high temperature, the negative electrode active material can be uniformly and quickly pre-doped with the alkali metal ion. Since the negative electrode active material can be uniformly pre-doped with the alkali metal ion, the potential of the negative electrode can be sufficiently decreased even when the amount of pre-doping is small.

The pre-doping temperature is 70°C or higher, preferably 75°C or higher, and more preferably 80°C or higher. The pre-doping temperature is 125°C or lower and preferably 120°C or lower.

These lower limits and upper limits can be freely combined with each other. The pre-doping temperature may be, for example, 75°C to 125°C or 80°C to 125°C.

In the third step, when the negative electrode and the third electrode are shortcircuited with the electrode group being immersed in the electrolyte, the second alkali metal ion is caused to elute from the third electrode and occluded into the negative electrode active material. In the case where the third electrode and the negative electrode are in direct contact with each other, by immersing the third electrode and the negative electrode in the electrolyte, the second alkali metal ion is occluded into the negative electrode active material. Alternatively, a voltage may be applied between the third electrode and the negative electrode with the electrode group being immersed in the electrolyte. Such a method is effectively employed when the third electrode and the negative electrode are not in direct contact with each other. The amount of the second alkali metal contained in the third electrode is preferably the same as the amount of the second alkali metal ion pre-doped into the negative electrode.

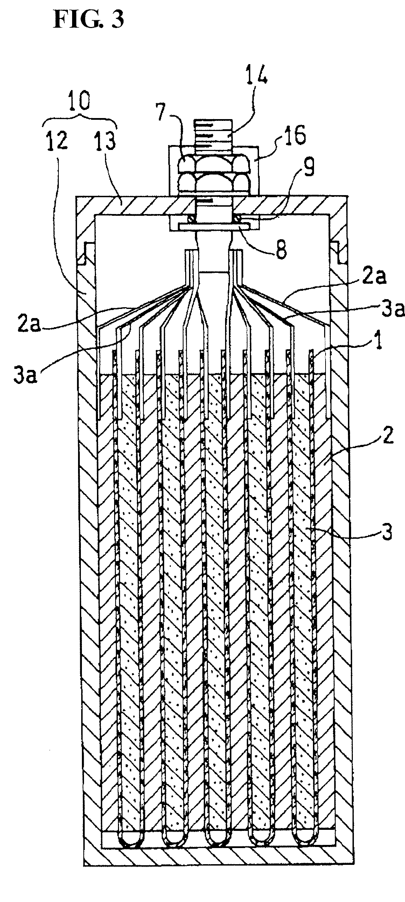

Figure 3 is a longitudinal sectional view schematically illustrating an alkali metal ion capacitor according to an embodiment of the present invention. The alkali metal ion capacitor includes a stacked electrode group, an electrolyte (not illustrated), and a prismatic aluminum cell case 10 that accommodates the electrode group and the electrolyte. The cell case 10 includes a case main body 12 having an open top and a closed bottom and a lid member 13 that closes the top opening.

A safety valve 16 for releasing a gas to be generated inside when the internal pressure of the cell case 10 increases is disposed at the center of the lid member 13. An external positive electrode terminal 14 that penetrates the lid member 13 is disposed on one side of the lid member 13 with respect to the safety valve 16. An external negative electrode terminal that penetrates the lid member 13 is disposed on the other side of the lid member 13.

The stacked electrode group includes a plurality of positive electrodes 2, a plurality of negative electrodes 3, and a plurality of separators 1 disposed between the electrodes, each of the positive electrodes 2 and the negative electrodes 3 having a rectangular sheet-like shape. Referring to Fig. 3, each of the separators 1 has a bag shape so as to surround a corresponding one of the positive electrodes 2. However, the shape of each separator is not particularly limited. The plurality of positive electrodes 2 and the plurality of negative electrodes 3 are alternately disposed in a stacking direction in the electrode group.

A positive electrode lead strip 2a may be formed on one end portion of each of the positive electrodes 2. The positive electrode lead strips 2a of the plurality of positive electrodes 2 are bundled and connected to the external positive electrode terminal 14 disposed on the lid member 13 of the cell case 10, whereby the plurality of positive electrodes 2 are connected in parallel. Similarly, a negative electrode lead strip 3a may be disposed on one end portion of each of the negative electrodes 3. The negative electrode lead strips 3a of the plurality of negative electrodes 3 are bundled and connected to the external negative electrode terminal disposed on the lid member 13 of the cell case 10, whereby the plurality of negative electrodes 3 are connected in parallel. The bundle of the positive electrode lead strips 2a and the bundle of the negative electrode lead strips 3a are desirably disposed on left and right sides of one end face of the electrode group with a distance kept between the bundles so as not to come into contact with each other.

Each of the external positive electrode terminal 14 and the external negative electrode terminal is columnar and has a thread groove at least in the externally exposed portion. A nut 7 is engaged with the thread groove of each terminal, and is screwed to secure the nut 7 to the lid member 13. A collar portion 8 is provided in a portion of each terminal inside the cell case 10. Screwing the nut 7 allows the collar portion 8 to be secured to the inner surface of the lid member 13 with a washer 9 provided between the collar portion 8 and the lid member 13.

The electrode group is not limited to the stacked electrode group, and may be an electrode group formed by winding positive electrodes and negative electrodes with separators disposed therebetween. The dimensions of the negative electrode may be larger than those of the positive electrode from the viewpoint of preventing the precipitation of the alkali metal on the negative electrode.

The cell case is not limited to a cell case made of a metal such as aluminum, and may be a laminate film (e.g., aluminum laminate film) or the like.

### [Appendix]

Regarding the above embodiments, the following appendixes will be further disclosed.

### (Appendix 1)

An alkali metal ion capacitor including a positive electrode containing a positive electrode active material, a negative electrode containing a negative electrode active material, a separator disposed between the positive electrode and the negative electrode, and an electrolyte,
wherein the electrolyte contains an alkali metal salt and an ionic liquid, a total content of the alkali metal salt and the ionic liquid in the electrolyte is 60 mass% or more, and the electrolyte has alkali metal ion conductivity,
the alkali metal salt is a salt of a first alkali metal ion serving as a first cation and a first anion,
the positive electrode active material contains a material that reversibly carries at least the first anion,
the negative electrode active material contains a material that reversibly carries the first alkali metal ion,
the negative electrode active material is pre-doped with a second alkali metal ion until a potential of the negative electrode reaches 0.05 V or less with respect to a second alkali metal, and
the alkali metal ion capacitor has an upper-limit voltage for charging and discharging of more than 3.8 V.

According to such an alkali metal ion capacitor, even if charging is performed to an upper-limit voltage of more than 3.8 V, charging and discharging can be reversibly performed in a stable manner. Furthermore, even if charging is performed to a high upper-limit voltage, gas is not easily generated. Thus, an alkali metal ion capacitor with high capacity can be produced.

### (Appendix 2)

In Appendix 1, preferably, the first alkali metal ion and the second alkali metal ion are each a lithium ion,
the first anion is a bis(sulfonyl)amide anion or a fluorine-containing borate anion, and the second anion is the same as the first anion,
the second cation is an organic cation,
the positive electrode contains the positive electrode active material and a positive electrode current collector on which the positive electrode active material is carried,
the negative electrode contains the negative electrode active material and a negative electrode current collector on which the negative electrode active material is carried,
the positive electrode current collector is a first metal porous body having a hollow skeleton with a three-dimensional network structure, and
the negative electrode current collector is a second metal porous body having a hollow skeleton with a three-dimensional network structure.

According to an embodiment of Appendix 2, the movement of ions in the electrolyte, the occlusion of alkali metal ions into the negative electrode active material during charging and discharging, and the release of the alkali metal ions from the negative electrode active material can be smoothly performed. Furthermore, the positive electrode and the negative electrode can be filled with a large amount of active material. This is advantageous in terms of increasing the capacity of the capacitor, and the output can also be increased.

### (Appendix 3)

In Appendix 1 or Appendix 2, preferably,
the first anion is a bis(fluorosulfonyl)amide anion, a bis(trifluorosulfonyl)amide anion, or a tetrafluoroborate ion, and
the second cation is an organic onium cation having an imidazole skeleton or an organic onium cation having a pyrrolidine skeleton.

When the electrolyte contains such an anion and a cation, the viscosity and melting point of the electrolyte can be decreased, which allows smooth movement of ions. Furthermore, alkali metal ions serving as charge carriers can be smoothly occluded into and released from the negative electrode active material, and thus good charge-discharge properties are easily achieved.

### (Appendix 4)

In any one of Appendix 1 to Appendix 3, preferably, the alkali metal salt is LITFSA and the ionic liquid contains EMITFSA.

### (Appendix 5)

In any one of Appendix 1 to Appendix 3, preferably, the alkali metal salt is LIFSA and the ionic liquid contains MPPYFSA.

When the electrolyte containing the alkali metal salt and the ionic liquid according to Appendix 4 or Appendix 5 is used, high ion conductivity is easily achieved, and the charge-discharge properties are easily improved.

### Examples

Hereafter, the present invention will be specifically described based on Examples and Comparative Examples, but the present invention is not limited to Examples below.

### Example 1

A lithium ion capacitor was produced through the following procedure.

### (1) Production of positive electrode

### (a) Production of positive electrode current collector

A thermosetting polyurethane foam (porosity: 95 vol%, number of pores (cells) per inch (= 2.54 cm) of a surface: about 50, 100 mm in length x 30 mm in width x 1.1 mm in thickness) was prepared.

The foam was immersed in a conductive suspension containing graphite, carbon black (average particle diameter D₅₀: 0.5 µm), a resin binder, a penetrant, and an antifoaming agent, and then dried to form a conductive layer on a surface of the foam. The total content of the graphite and the carbon black in the suspension was 25 mass%.

The foam having the conductive layer formed on the surface thereof was immersed in a molten-salt aluminum plating bath, and a direct current having a current density of 3.6 A/dm² was applied for 90 minutes to form an aluminum layer. The mass of the aluminum layer per apparent area of the foam was 150 g/m². The molten-salt aluminum plating bath contained 33 mol% of 1-ethyl-3-methylimidazolium chloride and 67 mol% of aluminum chloride. The temperature of the molten-salt aluminum plating bath was 40°C.

The foam having the aluminum layer formed on the surface thereof was immersed in a lithium chloride-potassium chloride eutectic molten salt at 500°C, and a negative potential of -1 V was applied for 30 minutes to decompose the foam. The resulting aluminum porous body was taken out from the molten salt, cooled, washed with water, and dried to obtain a positive electrode current collector. The resulting positive electrode current collector had a three-dimensional network porous structure which reflected the shape of the pores of the foam and in which the pores were interconnected with each other. The positive electrode current collector had a porosity of 94 vol%, an average pore size of 550 µm, a specific surface area (BET specific surface area) measured by a BET method of 350 cm²/g, and a thickness of 1100 µm. The aluminum skeleton having the three-dimensional network structure had, in the inner part thereof, an interconnected-pore-shaped cavity formed by removal of the foam. Thus, a positive electrode current collector was obtained.

### (b) Production of positive electrode

An activated carbon powder (specific surface area: 2300 m²/g, average particle diameter: about 5 µm) serving as a positive electrode active material, acetylene black serving as a conductive assistant, PVDF (NMP solution containing PVDF in a concentration of 12 mass%) serving as a binder, and NMP serving as a dispersion medium were mixed and stirred in a mixer to prepare a positive electrode mixture slurry. The mass ratio of the components in the slurry was activated carbon:acetylene black:PVDF = 87:3:10.

The current collector obtained in the process (a) described above was filled with the positive electrode mixture slurry, and drying was performed at 100°C for 30 minutes. The dried product was rolled using a pair of rolls to produce a positive electrode having a thickness of 840 µm.

### (2) Production of negative electrode

### (a) Production of negative electrode current collector

A Cu coating layer (conductive layer) having a coating weight of 5 g/cm² was formed by sputtering on a surface of the same thermosetting polyurethane foam as that used in the production of the positive electrode current collector.

The foam having the conductive layer formed on the surface thereof was used as a workpiece. The foam was immersed in a copper sulfate plating bath, and a direct current having a cathode current density of 2 A/dm² was applied to form a Cu layer on the surface. The copper sulfate plating bath contained 250 g/L of copper sulfate, 50 g/L of sulfuric acid, and 30 g/L of copper chloride. The temperature of the copper sulfate plating bath was 30°C.

The foam having the Cu layer formed on the surface thereof was heat-treated in an air atmosphere at 700°C to decompose the foam and then fired in a hydrogen atmosphere to reduce the oxide film formed on the surface. Thus, a copper porous body (negative electrode current collector) was obtained. The resulting negative electrode current collector had a three-dimensional network porous structure which reflected the shape of the pores of the foam and in which the pores were interconnected with each other. The negative electrode current collector had a porosity of 92 vol%, an average pore size of 550 µm, a BET specific surface area of 200 cm²/g, and a thickness of 1000 µm. The copper skeleton having the three-dimensional network structure had, in the inner part thereof, an interconnected-pore-shaped cavity formed by removal of the foam.

### (b) Production of negative electrode

An artificial graphite powder serving as a negative electrode active material, acetylene black serving as a conductive assistant, PVDF serving as a binder, and NMP serving as a dispersion medium were mixed with each other to prepare a negative electrode mixture slurry. The mass ratio of the graphite powder, acetylene black, and PVDF was 90:5:5.

The current collector obtained in the process (a) described above was filled with the negative electrode mixture slurry, and drying was performed at 100°C for 30 minutes. The dried product was rolled using a pair of rolls to produce a negative electrode having a thickness of 180 µm.

In the processes (1) and (2), the filling amounts of the positive electrode mixture and the negative electrode mixture were controlled so that the chargeable capacity of the negative electrode after the pre-doping was about 1.2 times or more the capacity of the positive electrode.

### (3) Production of lithium electrode (third electrode)

A lithium foil (thickness: 50 µm) was pressure-bonded to one surface of a punched copper foil (thickness: 20 µm, opening diameter: 50 µm, opening ratio: 50%, 2 cm x 2 cm) serving as a current collector to produce a lithium electrode. A nickel lead was welded on the other surface of the current collector of the lithium electrode.

### (4) Production of lithium ion capacitor

The positive electrode produced in (1) and the negative electrode produced in (2) were each cut into a size of 1.5 cm x 1.5 cm, and a portion of the mixture having a width of 0.5 mm was removed along one side to form a current collector-exposed portion. An aluminum lead was welded to the current collector-exposed portion of the positive electrode and a nickel lead was welded to the current collector-exposed portion of the negative electrode. In each of the produced positive electrode and negative electrode, the area of a portion where the mixture was present was 1.5 cm².

A cellulose separator (thickness: 60 µm) was disposed between the positive electrode and the negative electrode so that the positive electrode and the negative electrode were stacked onto each other. Thus, an electrode group of a single cell was produced. Furthermore, the lithium electrode was disposed on the negative electrode side of the electrode group with a polyolefin separator (a stacked body of a polyethylene microporous membrane and a polypropylene microporous membrane) disposed between the lithium electrode and the electrode group. The resulting stacked product was accommodated in a cell case made of an aluminum laminate sheet.

Subsequently, an electrolyte was poured into the cell case so that the positive electrode, the negative electrode, and the separator were impregnated with the electrolyte. The electrolyte was an EMIFSA solution containing LiFSA in a concentration of 1.0 mol/L. Lastly, the cell case was sealed while the pressure was reduced using a vacuum sealer.

A lead of the negative electrode and a lead of the lithium electrode were connected to a power source outside the cell case. The cell in this state was allowed to stand in a thermostatic chamber at 70°C for a predetermined time so that the temperature of the electrolyte reached the temperature of the thermostatic chamber. Subsequently, charging was performed between the negative electrode and the lithium electrode at a current of 0.2 mA/cm² up to a potential of 0 V with respect to metal lithium. Then, by performing discharging of 2.3 mAh at a current of 0.2 mA/cm², the negative electrode active material was pre-doped with lithium so that the potential of the negative electrode after the pre-doping reached 0.05 V or less with respect to lithium metal. Thus, a lithium ion capacitor (A1) was produced. The capacity (initial capacity) was measured by performing charging and discharging between 2.2 V and 4.2 V at a current of 1 mA/cm². The design capacity of the lithium ion capacitor A1 was about 2.1 mAh/cm² at the time of charging of 5.0 V.

The following evaluations were performed using the produced positive electrode and negative electrode and the produced lithium ion capacitor.

### (a) Electrode capacity and Cₙ/Cₚ ratio

Two positive electrodes were prepared, and a cellulose separator (thickness: 60 µm) was disposed between the positive electrodes to form an electrode group. Subsequently, the electrode group and the same electrolyte as that described above were accommodated in an aluminum laminate bag to complete an EDLC.

The obtained EDLC was charged and discharged in a voltage range of 0 to 4 V, and the reversible capacity Cₚ of the positive electrode was determined from the discharge capacity.

The negative electrode and the same lithium electrode as that described above were prepared, and a cellulose separator (thickness: 60 µm) was disposed therebetween to form an electrode group. A half cell was produced using the formed electrode group and the same electrolyte as that described above. The half cell was charged and discharged in a voltage range of 0 to 2.5 V, and the reversible capacity Cₙ of the negative electrode was determined from the discharge capacity.

The Cₙ/Cₚ ratio was calculated by dividing Cₙ by Cₚ.

### (b) Upper-limit voltage for charging

The lithium ion capacitor was charged at 30°C at a current of 0.4 mA/cm² until the voltage reached 3.8 V, and discharged until the voltage reached 3.0 V. Subsequently, the lithium ion capacitor was charged and discharged in the same manner as above, except that the upper-limit voltage for charging was increased to 5.0 V in increments of 0.2 V. Thus, the chargeable upper-limit voltage was measured.

### (c) Capacity of lithium ion capacitor

The lithium ion capacitor was charged at 30°C at a current of 0.4 mA/cm² until the voltage reached the upper-limit voltage measured in (b), and discharged until the voltage reached 3.0 V. The charge capacity (mAh) and the discharge capacity (mAh) herein were determined.

### Examples 2 to 12 and Comparative Example 1

Lithium ion capacitors (A2 to A12) were produced and evaluated in the same manner as in Example 1, except that electrolytes containing lithium salts and media (ionic liquids or organic solvents) listed in Table 1 were used. The Cₙ/Cₚ ratio was controlled by adjusting the thickness of the negative electrode. In Comparative Example 1 (B1), a solution prepared by dissolving LiPF₆ in a medium (mixed solvent) containing ethylene carbonate (EC) and diethyl carbonate (DEC) at a volume ratio of 1:1 so that the concentration of LiPF₆ was 1.0 mol/L was used as an electrolyte.

### Comparative Example 2

A lithium ion capacitor (B2) was produced and evaluated in the same manner as in Example 3, except that the negative electrode active material was pre-doped with lithium so that the potential of the negative electrode after pre-doping reached 0.6 V with respect to lithium metal.

Table 1 shows the results. The lithium ion capacitors A1 to A12 correspond to Examples and the lithium ion capacitors B1 and B2 correspond to Comparative Examples.

**[Table 1]**

| | Lithium salt | Medium | Cₚ (mAh) | Cₙ/Cₚ | Discharge capacity (mAh) | Upper-limits voltage (V) |
|---|---|---|---|---|---|---|
| A1 | LiFSA | EMIFSA | 2.14 | 4.1 | 2.06 | 5.0 |
| A2 | LiFSA | EMIFSA | 2.12 | 1.4 | 2.05 | 5.0 |
| A3 | LiFSA | EMIFSA | 2.10 | 6.9 | 2.02 | 5.0 |
| A4 | LiFSA | BMIFSA | 2.13 | 4.1 | 2.07 | 5.0 |
| A5 | LiFSA | BMIFSA | 2.10 | 1.4 | 2.01 | 5.0 |
| A6 | LiFSA | BMIFSA | 2.13 | 6.8 | 2.07 | 5.0 |
| A7 | LiFSA | MPPYFSA | 2.10 | 4.1 | 2.05 | 5.0 |
| A8 | LiFSA | MPPYFSA | 2.14 | 1.4 | 2.12 | 5.0 |
| A9 | LiFSA | MPPYFSA | 2.14 | 6.8 | 2.10 | 5.0 |
| A10 | LiFSA | MBPYFSA | 2.11 | 4.1 | 2.11 | 5.0 |
| A11 | LiFSA | MBPYFSA | 2.11 | 1.4 | 2.11 | 5.0 |
| A12 | LiFSA | MBPYFSA | 2.11 | 6.9 | 2.06 | 5.0 |
| B1 | LiPF₆ | EC+DEC | 2.15 | 4.1 | 0.86 | 3.8 |
| B2 | LiFSA | EMIFSA | 2.10 | 1.1 | 0.64 | 5.0 |

In the lithium ion capacitor B1 in which the ionic liquid was not used, when the upper-limit voltage for charging exceeded 3.8 V, gas was generated in the lithium ion capacitor and the lithium ion capacitor considerably swelled, and thus the charging was stopped. The discharge capacity of the lithium ion capacitor B1 was 0.18 mAh, which was much lower than 0.3 mAh of Cₚ. The discharge capacity was low in the lithium ion capacitor B1 because charging was performed to only 3.8 V and thus the capacity of the positive electrode was not sufficiently utilized.

In the lithium ion capacitor B2 of Comparative Example 2 in which the ionic liquid was used for the electrolyte as in Examples, but the potential of negative electrode during pre-doping was more than 0.05 V, charging could be performed to an upper-limit voltage of 5 V. In the lithium ion capacitor B2, however, the discharge capacity in the form of a lithium ion capacitor was low. This is because the amount of lithium pre-doped into the negative electrode was small and thus the potential of the negative electrode was not sufficiently decreased.

In contrast, in the lithium ion capacitors A1 to A12 of Examples, charging and discharging could be stably performed at any upper-limit voltage for charging in the range of 3.8 V to 5 V. In Examples, the discharge capacity of the lithium ion capacitors was substantially equal to Cₚ, and the utilization efficiently of the positive electrode was high. Therefore, high-capacity lithium ion capacitors were produced in Examples.

For the lithium ion capacitors of Examples, the chargeable upper-limit voltage measured in (b) was set to the upper-limit voltage for charging, and the charge-discharge cycle in (b) was repeatedly performed 20 times to measure the discharge capacity of the lithium ion capacitors. The capacity retention rate in the 20th cycle obtained by calculation was 98%. As described above, the lithium ion capacitors of Examples could be reversibly charged and discharged in a stable manner.

### Example 13

A sodium ion capacitor A5 was produced in the same manner as in Example 1, except that a sodium electrode was used instead of the lithium electrode, an EMIFSA solution containing NaFSA in a concentration of 1.0 mol/L was used as the electrolyte, and hard carbon was used as a carbon material for the negative electrode. The sodium electrode was produced in the same manner as in the process (3) of Example 1, except that a sodium foil (thickness: 50 µm) was used instead of the lithium foil.

The produced sodium ion capacitor A5 was heated to 30°C, charged at a current of 0.4 mA/cm² until the voltage reached 3.8 V, and discharged until the voltage reached 2.9 V. Then, charging and discharging were performed in the same manner as that described above, except that the upper-limit voltage for charging was increased to 5.0 V in increments of 0.2 V. Thus, the chargeable upper-limit voltage was measured. As a result, the sodium ion capacitor could be stably charged and discharged at any upper-limit voltage for charging in the range of 3.8 V to 5 V.

As in the case of the lithium ion capacitor, the capacity retention ratio of the sodium ion capacitor in the 20th cycle was calculated. The capacity retention ratio was 98%. As described above, the sodium ion capacitor in Example could be reversibly charged and discharged in a stable manner.

### Example 14

The influence of temperature during pre-doping on the positive electrode and negative electrode produced in Example 1 was investigated through the following procedure.

The positive electrode and negative electrode produced in Example 1 were each cut into a size of 5 cm x 5 cm. A lead was welded to each of the positive electrode and the negative electrode in the same manner as in the process (4) of Example 1. Thus, three positive electrodes and four negative electrodes were prepared for each of Examples and Comparative Examples.

The positive electrodes and the negative electrodes were alternately stacked on top of each other with a cellulose separator (thickness: 60 µm) disposed between the positive electrode and the negative electrode. Thus, a stacked body including the negative electrodes disposed on both ends thereof was formed. A lithium electrode having a size of 5 cm x 5 cm was stacked on the negative electrode on one of the ends of the stacked body with a cellulose separator (thickness: 60 µm) disposed between the negative electrode and the lithium electrode. Thus, an electrode group was formed. The same lithium electrode as that in Example 1 was used.

The produced electrode group was accommodated in a cell case made of an aluminum laminate sheet together with the electrolyte to produce a half cell (A13). The leads connected to the positive electrode, negative electrode, and the lithium electrode of the electrode group were drawn to the outside of the cell as external terminals. The same electrolyte as that of Example 1 was used.

The half cell was allowed to stand in a thermostatic chamber at 70°C for one hour to stabilize the cell temperature. Then, lithium doping was started by short-circuiting the external terminals of the negative electrode and the lithium electrode. Two hours later, the cell was taken out from the thermostatic chamber and dismantled. Each of the four negative electrodes were punched out in a disc-like shape having a diameter of 16 mm at nine points. Thus, the distribution state of lithium was measured by X-ray fluorescence analysis.

Four half cells were produced in total. For the remaining three of the half cells (half cells A14 to A16), the distribution state of lithium in the negative electrode was measured in the same manner as above, except that the temperature of the thermostatic chamber during lithium doping was changed to 90°C, 120°C, and 60°C.

Table 2 shows the distribution states of lithium in the negative electrode (first negative electrode) closest to the lithium electrode and in the negative electrode (fourth negative electrode) farthest from the lithium electrode for each of the half cells. The distribution state of lithium was evaluated based on the lithium content in the negative electrode and the variation (in-plane variation) in the distribution of lithium in a single negative electrode.

The in-plane variation in the distribution of lithium was evaluated by measuring the lithium content in the disc-shaped sample of the negative electrode by induced plasma atomic emission spectroscopy and using the measured value. Specifically, the average of lithium contents of nine samples for a single negative electrode was calculated. The ratio (%) of the difference between the maximum lithium content and the minimum lithium content relative to the average was determined, which was used as an index of the in-plane variation.

In Table 2, the in-plane variation in the first negative electrode is represented by D₁ and the in-plane variation in the fourth negative electrode is represented by D₄. The ratio R_{4/1} of the lithium content was determined by dividing the average of lithium contents in the fourth negative electrode by the average of lithium contents in the first negative electrode. A large value of R_{4/1} indicates a high pre-doping rate of lithium.

**[Table 2]**

| | Temperature °C | First negative electrode | | | | Fourth negative electrode | | | | R_{4/1} |
|---|---|---|---|---|---|---|---|---|---|---|
| | | Li content mass% | | | D₁ % | Li content mass% | | | D₄ % | |
| A13 | 70 | 2.09 | 1.96 | 2.05 | 13.3 | 1.88 | 1.81 | 1.97 | 13.3 | 0.93 |
| | | 2.18 | 1.98 | 1.98 | | 2.07 | 2.03 | 1.82 | | |
| | | 2.18 | 1.91 | 2.14 | | 1.86 | 1.82 | 1.99 | | |
| A14 | 90 | 2.22 | 2.15 | 2.26 | 8.8 | 2.11 | 2.18 | 2.19 | 8.8 | 0.96 |
| | | 2.22 | 2.18 | 2.16 | | 2.03 | 2.19 | 2.12 | | |
| | | 2.31 | 2.23 | 2.11 | | 2.07 | 2.01 | 2.05 | | |
| A15 | 120 | 2.53 | 2.57 | 2.56 | 3.6 | 2.45 | 2.51 | 2.45 | 5.4 | 0.97 |
| | | 2.50 | 2.51 | 2.50 | | 2.49 | 2.50 | 2.39 | | |
| | | 2.49 | 2.56 | 2.48 | | 2.38 | 2.49 | 2.45 | | |
| A16 | 60 | 1.21 | 1.45 | 1.26 | 32.1 | 0.97 | 0.85 | 0.92 | 32.9 | 0.76 |
| | | 1.42 | 1.39 | 1.33 | | 1.12 | 0.99 | 1.01 | | |
| | | 1.11 | 1.04 | 1.22 | | 0.97 | 1.10 | 0.80 | | |

As shown in Table 2, when the lithium doping was performed at a temperature of 70°C or higher, the variation (in-plane variation) in the distribution of lithium in the negative electrode is small compared with the case where the lithium doping was performed at 60°C. Thus, lithium can be more uniformly doped. Furthermore, when the lithium doping was performed at a temperature of 70°C or higher, the ratio of the amounts of lithium doped into the fourth negative electrode and the first negative electrode is close to 1 compared with the case where the lithium doping was performed at 60°C. Therefore, when the lithium doping is performed at a temperature of 70°C or higher, the doping rate of lithium can be increased.

### Industrial Applicability

In the alkali metal ion capacitor according to an embodiment of the present invention, charging and discharging can be reversibly performed in a stable manner even when the charging voltage is increased, and thus a high-capacity alkali metal ion capacitor can be obtained. Therefore, such an alkali metal ion capacitor is applicable to various uses required to have high capacity.

### Reference Signs List

- 101: cellular pore of metal porous body
- 102: fibrous portion of metal porous body
- 102a: hollow in fibrous portion 102
- W_{f}: width of hollow 102a
- 103: opening between cellular pores

- 1: separator
- 2: positive electrode
- 2a: positive electrode lead strip
- 3: negative electrode
- 3a: negative electrode lead strip
- 7: nut
- 8: collar portion
- 9: washer
- 10: cell case
- 12: case main body
- 13: lid member
- 14: external positive electrode terminal
- 16: safety valve

- 200: charging and discharging system
- 201: capacitor
- 202: charge and discharge control unit
- 202a: charge control unit
- 202b: discharge control unit
- 203: loading device

## Claims

1. An alkali metal ion capacitor comprising a positive electrode containing a positive electrode active material, a negative electrode containing a negative electrode active material, a separator disposed between the positive electrode and the negative electrode, and an electrolyte,
wherein the electrolyte contains an alkali metal salt and an ionic liquid, a total content of the alkali metal salt and the ionic liquid in the electrolyte is 60 mass% or more, and the electrolyte has alkali metal ion conductivity,
the alkali metal salt is a salt of a first alkali metal ion serving as a first cation and a first anion,
the positive electrode active material contains a material that reversibly carries at least the first anion,
the negative electrode active material contains a material that reversibly carries the first alkali metal ion,
the negative electrode active material is pre-doped with a second alkali metal ion until a potential of the negative electrode reaches 0.05 V or less with respect to a second alkali metal, and
the alkali metal ion capacitor has an upper-limit voltage for charging and discharging of more than 3.8 V.

2. The alkali metal ion capacitor according to Claim 1,
wherein the first anion is a bis(sulfonyl)amide anion, and
a content of a salt of the first alkali metal ion and the bis(sulfonyl)amide anion in the alkali metal salt is 65 mol% or more.

3. The alkali metal ion capacitor according to Claim 1 or 2,
wherein the first anion is a bis(sulfonyl)amide anion,
the ionic liquid contains a molten salt of a second cation and a second anion,
the second cation is an organic cation, and
the second anion is the same as the first anion.

4. The alkali metal ion capacitor according to Claim 3,
wherein the first anion is a bis(fluorosulfonyl)amide anion, and
the organic cation is an organic onium cation having an imidazole skeleton.

5. The alkali metal ion capacitor according to any one of Claims 1 to 4,
wherein the positive electrode contains the positive electrode active material and a positive electrode current collector on which the positive electrode active material is carried,
the negative electrode contains the negative electrode active material and a negative electrode current collector on which the negative electrode active material is carried,
the positive electrode current collector is a first metal porous body having a hollow skeleton with a three-dimensional network structure, and
the negative electrode current collector is a second metal porous body having a hollow skeleton with a three-dimensional network structure.

6. The alkali metal ion capacitor according to any one of Claims 1 to 5, wherein the total content of the alkali metal salt and the ionic liquid in the electrolyte is 70 mass% or more.

7. The alkali metal ion capacitor according to any one of Claims 1 to 6,
wherein the first alkali metal ion is at least one ion selected from the group consisting of a lithium ion and a sodium ion, and
the second alkali metal ion is the same as the first alkali metal ion.

8. The alkali metal ion capacitor according to any one of Claims 1 to 7, wherein the upper-limit voltage for charging and discharging is more than 4.2 V and 5 V or less.

9. The alkali metal ion capacitor according to any one of Claims 1 to 8, wherein the negative electrode active material contains at least one material selected from the group consisting of hard carbon and a carbonaceous material having a graphite crystal structure.

10. The alkali metal ion capacitor according to any one of Claims 1 to 9, wherein a ratio Cₙ/Cₚ of a reversible capacity Cₙ of the negative electrode to a reversible capacity Cₚ of the positive electrode is 1.2 or more.

11. A method for producing an alkali metal ion capacitor, the method comprising:
a first step of preparing an electrolyte having alkali metal ion conductivity and containing an ionic liquid and an alkali metal salt which is a salt of a first alkali metal ion serving as a first cation and a first anion, a total content of the alkali metal salt and the ionic liquid being 60 mass% or more;
a second step of accommodating, in a cell case, the electrolyte and an electrode group that includes a positive electrode serving as a first electrode containing a positive electrode active material, a negative electrode serving as a second electrode containing a negative electrode active material, a separator disposed between the positive electrode and the negative electrode, and a third electrode electrically connected to the negative electrode and containing a second alkali metal; and
a third step of causing a second alkali metal ion to elute from the third electrode at a temperature of 70°C to 125°C while the electrode group is immersed in the electrolyte to pre-dope the negative electrode active material with the second alkali metal ion until a potential of the negative electrode reaches 0.05 V or less with respect to the second alkali metal, thereby producing an alkali metal ion capacitor having an upper-limit voltage for charging and discharging of more than 3.8 V,
wherein the positive electrode active material contains a material that reversibly carries at least the first anion, and
the negative electrode active material contains a material that reversibly carries the first alkali metal ion.

12. A method for charging and discharging an alkali metal ion capacitor, the method comprising:
a step of charging and discharging an alkali metal ion capacitor at an upper-limit voltage of more than 3.8 V,
wherein the alkali metal ion capacitor includes a positive electrode containing a positive electrode active material, a negative electrode containing a negative electrode active material, a separator disposed between the positive electrode and the negative electrode, and an electrolyte,
the electrolyte has alkali metal ion conductivity and contains an alkali metal salt and an ionic liquid, a total content of the alkali metal salt and the ionic liquid in the electrolyte being 60 mass% or more,
the alkali metal salt is a salt of a first alkali metal ion serving as a first cation and a first anion,
the positive electrode active material contains a material that reversibly carries at least the first anion,
the negative electrode active material contains a material that reversibly carries the first alkali metal ion, and
the negative electrode active material is pre-doped with a second alkali metal ion until a potential of the negative electrode reaches 0.05 V or less with respect to a second alkali metal.
